# EUROPEAN PATENT SPECIFICATION

(11) **EP 2 851 219 B1**
(45) Date of publication and mention of the grant of the patent: **21.06.2017**
(21) Application number: 13184981.2
(22) Date of filing: 18.09.2013
(51) Int. Cl.: B60D 5/00

(54) **Articulated joint for an implement carrier vehicle and an implement carrier vehicle comprising such articulated joint**
Gelenkverbindung für ein Geräteträgerfahrzeug und Geräteträgerfahrzeug mit einer solchen Gelenkverbindung
Joint articulé pour véhicule de support d'instrument et véhicule, de support d'instrument comportant un tel joint articulé

(43) Date of publication of application: 25.03.2015
(73) Proprietor: Alfred Kärcher GmbH & Co. KG, 71364 Winnenden (DE)
(72) Inventor: Wagner, Ronny, 573 95 Ydre (SE)
(74) Representative: Awapatent AB

(56) References cited:
- EP-A1- 0 771 710
- EP-A1- 1 038 761

## Description

### FIELD OF THE INVENTION

The present invention relates to an articulated joint for an implement carrier vehicle and an implement carrier vehicle comprising such articulated joint, according to the independent claims.

### BACKGROUND OF THE INVENTION

It is well known to hitch ground or floor maintenance implements to an implement carrier vehicle. The maintenance implements may be hitched in front of the vehicle as well as behind it or on top rear via a conventional lifting-arm construction at the front and rear of the vehicle. The implements may e.g. be cutting decks, sweepers, flail mowers, snow blades snow throwers, buckets, floor cleaning devices or any other type of implement suitable for any particular maintenance need.

Besides high flexibility as to what type of implements such an implement carrier vehicle is able to carry, it is also important that the vehicle has a small turning radius. Therefore, implement carrier vehicles often are provided with articulated steering such that the vehicle may turn more sharply, i.e. the vehicle is then split into front and rear halves connected by a vertical hinge, also called a waist link or an articulated joint.

An example of an implement carrier vehicle is shown in DE 102010040849 A1, which discloses a self-propelled vehicle which has a body with a longitudinal carrier unit and a drivers cabin. The vehicle comprises a front part and a rear part connected with an articulated joint.

The articulated joints connecting the front and rear parts of the vehicle are often treated with a lubricant, such as a lubricating grease. The lubricant minimizes friction between the portions of the articulated joint, and prevents the portions from wearing out. However, sometimes the lubricant has a tendency to travel out from the articulated joint such that some of the lubricant instead ends up on the outside of the articulated joint. This itself is not a problem, however, it may be a potential problem if the excessive lubricating grease continuously is wiped off or washed away from the joint. A known solution to this potential problem is to provide the joint with a sealing which prevents the lubricating grease from being removed or washed away.

An example of a ring-like seal for a spherical bearing, which sealing is adapted to prevent ingress of contaminations, is known from EP1608882 A1. This document discloses a sealed spherical bearing having a bearing housing, a ball located therein and a ring-like seal having an inner edge and an outer edge located between the bearing housing and the ball, one of the edges having a head and a skirt depending therefrom, the head lying in an annular groove formed in one of the ball or the housing and the skirt lying on a lip upstanding from the groove to define at least two sealing lines between the seal and the one of the ball or the housing, the other edge of the seal being fixedly mounted to the other of the ball or the housing. However, a drawback with such bellows seals is that the bellows sometimes gets caught between the links of the articulated joint in heavy turning between the front and rear parts of a vehicle.

A further example of a sealing of an articulated joint is shown in US2342407 A, which discloses a hitch for connection between a two-wheel tractor and a wheel supported trailing implement according the preamble of claim 1. Dust caps and seal rings prevent access of foreign matter to the bearings.

Yet another example of sealing an articulated joint is shown in EP 0 771 710 A1. According to this document, of which relevant features are reflected in the preamble of claim 1 below, a cover disc and a single annular seal are used to provide a sealed-off chamber in which a bearing and cooperating surfaces of the articulated joint are all enclosed. The cover disc requiers fasteners of its own, which renders the articulated joint less easy and straightforward to manufacture.

Thus, seals for articulated joints are known, however, the inventors of the present invention has identified a need for an improved sealing device which in particular is suitable for articulated joints for implement carrier vehicles, and which prevents the lubricant from being washed or wiped away. There is further a need for a sealed articulated joint for an implement carrier vehicle which makes cleaning of the vehicle with a high-pressure cleaner possible.

An object of the present invention is to provide an articulated joint comprising a sealing device which prevents the lubricant from being washed or wiped away from the joint, and in particular, from being washed away when being cleaned with a high-pressure cleaner.

Another object of the present invention is to provide an articulated joint comprising an improved sealing which prevents high pressure cleaners from pushing dirt into the joint and the bearing causing premature wear of the joint and the bearing. A further object of the present invention is to provide an articulated joint comprising an improved sealing which is suitable for being arranged between the front and rear part of an implement carrier vehicle which often makes sharp turns.

Yet another object of the present invention is to provide an articulated joint comprising a sealing which is less expensive, easy and straightforward to manufacture.

### SUMMARY OF THE INVENTION

The above-mentioned objects are achieved by the present invention according to the independent claim.

Preferred embodiments are set forth in the dependent claims.

According to a first aspect of the invention, the articulated joint for an implement carrier vehicle, which articulated joint is adapted to connect a front vehicle body and a rear vehicle body, comprises a socket arranged in a first articulation link portion, said first articulation link portion being adapted to be connected to one of said front or said rear vehicle body. Furthermore, said articulated joint comprises a stud which is arranged in a second articulation link portion, said stud extending along an axis A, said second articulation portion being adapted to be connected to another one of said front or rear vehicle body, said stud being pivotally arranged in said socket. The articulated joint further comprises at least one annular sealing device at least partly enclosing said stud and socket, and wherein said annular sealing device comprises a sealing flange.

In other words, the articulated joint pivotally connects a front vehicle body and a rear vehicle body of an implement carrier vehicle. The first articulation link portion, comprising the socket, is e.g. attached to or interconnected with the front vehicle body, and the second articulation link portion, comprising the stud, is attached to or interconnected with the rear vehicle body, or vice versa. Accordingly, the articulated joint connects the front vehicle body and the rear vehicle body, such that a swivel connection is achieved between the front vehicle body and the rear vehicle body. Thus, the stud is pivotally arranged in said socket. In order to decrease friction between the stud and the socket and to prevent wearing out of the stud and the socket, the articulated joint is treated with a lubricant, e.g. a lubricating grease. The sealing device comprising the sealing flange, which at least partly encloses and protects the stud and socket, prevents the lubricant from being washed off or wiped away when cleaning the joint or the implement carrier vehicle. The sealing device further prevents dirt from being pushed into the joint.

The invention is based on the insight that providing the articulated joint with a a sealing device, which encloses the pivotally connected stud and socket, ensures that the lubricant is not removed from the articulated joint when the vehicle is being washed. The sealing flange seals the articulated joint and at the same times allowes the implement carrier vehicle to make sharp turns without the sealing device getting caught between the links of the articulated joint when the vehicle is turning.

In one embodiment, said annular sealing device and said sealing flange is arranged such that an annular sealing space, adapted to contain a lubricant, is provided. Thus, the sealing device comprising the sealing flange provides a sealed space between said pivotally connected stud and socket, and said sealing device. Thereby, the lubricant is prevented from being wiped or washed away from the articulated joint, and dirt is prevented from entering the sealing space

In one embodiment the sealing device, or at least the sealing flange, is made from a flexible material. The sealing flange being flexible, makes the sealing flange to abut more tightly against the articulated joint when a pressure is applied from outside of the articulated joint, e.g. when water from a high pressure cleaner hits the sealing flange. Thereby, an improved sealing effect occurs.

In one embodiment, said annular sealing space encloses said stud and socket. Thereby, the stud and socket, being pivotally connected, of the articulated joint are protected from ingress of e.g. water all the way around said articulated joint.

In one embodiment, said sealing flange is directed away from said axis A of said stud. Thereby, the sealing flange aids in forcing water away from the articulated joint, during cleaning of the joint, e.g. water from a high pressure cleaner. Furthermore, this also aids in preventing dirt from entering the sealing space. In fact, it allows some of the lubricant to escape out of the sealing space and thereby also prevents dirt from entering the sealing space.

In one embodiment, said sealing device has an essentially V-shaped cross-section.

In one embodiment, said articulated joint comprises at least one cover plate, adapted to at least partly cover said stud and said socket being pivotally connected. The cover plate protects the articulated joint from above.

In one embodiment, said sealing device is attached to said cover plate. The cover plate may be a circular plate. The sealing device may be attached to a lower surface of the cover plate. The lower surface may be provided with a fastening element in which said sealing device is attached or may be provided with a recess in which the sealing device is mounted. Preferably, a first edge of said sealing device is arranged in said fastening element or in said recess, and a second edge of said sealing device is provided with said sealing flange.

In one embodiment, said sealing flange seals said cover plate to said first articulation link portion. Thus, a first edge of said sealing device is attached to said cover plate, or arranged in a fastening element attached to said cover plate, and a second edge, comprising the sealing flange, seals said sealing device against said first articulation link portion. The sealing flange may abut against said first articulation link portion, such that a completely sealed sealing space is provided, or there may be a gap between the sealing flange and the first articulation link portion. In case of a gap, the gap must be sufficiently small such that a sealing effect occurs and such that the sealing device still prevents ingress of e.g. water, and prevents dirt from being pushed into the joint when the vehicle is being cleaned with a high pressure cleaner

In another embodiment, said sealing flange seals said cover plate to said second articulation link portion. In a similar way as above, a first edge of said sealing device is attached to said cover plate, or arranged in a fastening element attached to said cover plate, and a second edge, comprising the sealing flange, seals said sealing device against said second articulation link portion. The sealing flange may abut against said second articulation link portion, such that a completely sealed sealing space is provided, or there may be a gap between the sealing flange and the second articulation link portion. As also mentioned above, the gap must be sufficiently small such that a sealing effect occurs and such that the sealing device prevents ingress of e.g. water.

In one embodiment, a spherical bearing is arranged in said socket, and wherein said stud is arranged in said spherical bearing. The spherical bearing permits angular rotation about a central point in two orthogonal directions.

The sealing flange prevents dirt from being pushed in particular into the bearing which may cause premature wear of the bearing.

In one embodiment, said sealing flange seals said cover plate to said spherical bearing. The sealing flange may abut against said spherical bearing, such that a completely sealed sealing space is provided, or there may be a gap between the sealing flange and the spherical bearing. The gap must be sufficiently small such that a sealing effect occurs and such that the sealing device prevents ingress of e.g. water.

In one embodiment, said sealing device is attached to said first articulation portion or said second articulation portion.

In one embodiment, said articulated joint comprises an upper sealing device and a lower sealing device. Thereby, an upper and a lower sealing space is provided. Thereby the articulated joint is sufficiently sealed from above and from below.

According to a second aspect, the implement carrier vehicle for carrying at least one implement, comprises at least one articulated joint as described above. The implement carrier vehicle comprises a front vehicle body and a rear vehicle body and wherein said at least one articulated joint connects said front vehicle body and said rear vehicle body. The articulated joint comprises a sealing device comprising a sealing flange, thereby, the implement carrier vehicle may be cleaned using a high-pressure cleaner without that the lubricant is washed away.

In one embodiment, said implement carrier vehicle comprises a plurality of articulated joints.

The invention will now be described in detail with reference to the drawings.

### SHORT DESCRIPTION OF THE APPENDED DRAWINGS

Figure 1 shows a side view of an implement carrier vehicle comprising a plurality of articulated joints, the articulated joints are connecting a front vehicle body and a rear vehicle body, according to one embodiment of the present invention.
Figure 2 shows a cross-section A-A of the upper one of the articulated joints in Figure 1.
Figure 3 shows a cross-section A-A of the lower one of the articulated joints in Figure 1.
Figure 4 shows a side view of an implement carrier vehicle, schematically illustrated, according to one embodiment of the present invention.
Figure 5 shows an exploded view of a plurality of articulated joints for an implement carrier vehicle according to one embodiment of the present invention.

Throughout the figures the same reference signs designate the same, or essentially the same features.

### DETAILED DESCRIPTION OF PREFERRED EMBODIMENTS OF THE INVENTION

Throughout the application the words "upper" and "above" refers to the part located furthest away with respect to the ground, and the word "lower" and "below" refers to the part located closest in respect of the ground.

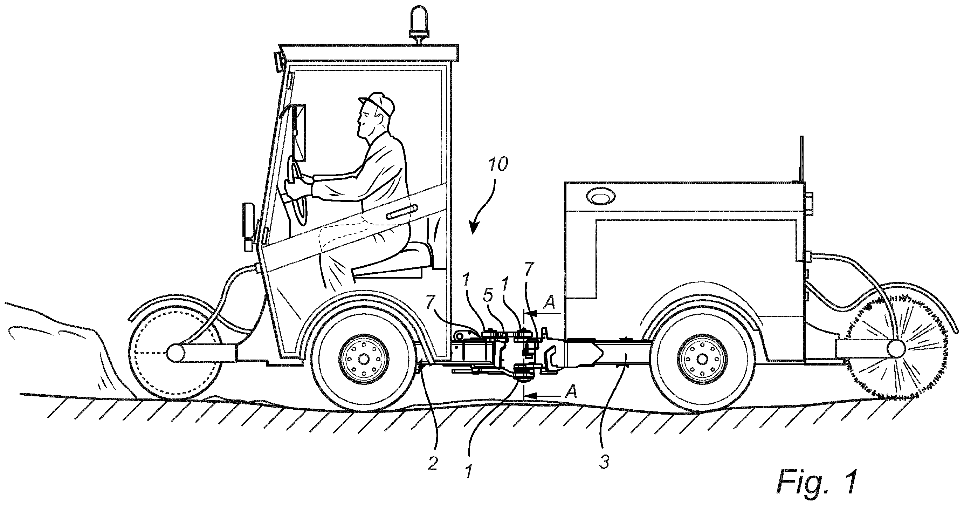

Figure 1 shows a side view of an implement carrier vehicle 10 comprising a plurality of articulated joints 1. In this embodiment, the implement carrier vehicle 10 is an articulated implement carrier vehicle 10. The articulated joints 1 are connecting a front vehicle body 2 and a rear vehicle body 3, according to one embodiment of the present invention. The front vehicle body 2 and the rear vehicle body 3 are interconnected with three articulated joints 1. One of the first articulation link portions 5 is provided with two sockets 4, one socket 4 is arranged at a first end of the first articulation link portion 5, and the other one at a second end of the first articulation link portion 5. In this case, the first end of the first articulation link portion 5 is connected with the front vehicle body 2 and the second end is connected to the rear vehicle body 3. In the lower articulated joint 1 the first articulation link portion 5 is connected to the front vehicle body 2 and the second articulation link portion 7 is connected to the rear vehicle body 3.

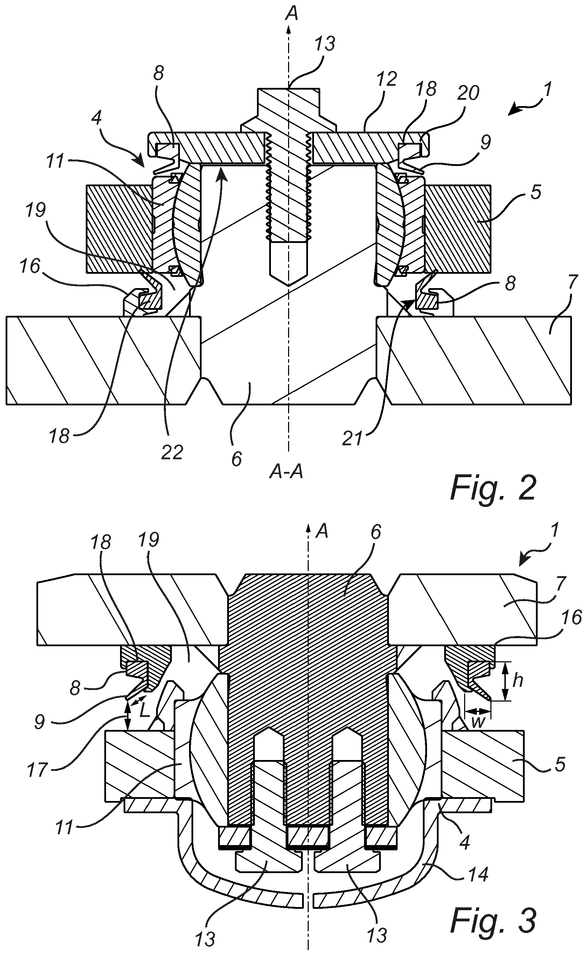

Figure 2 shows a cross-section A-A of the upper one of the articulated joints 1 in Figure 1. The articulated joint 1 is adapted to connect a front vehicle body 2 and a rear vehicle body 3. The articulated joint 1 comprises a socket 4 arranged in a first articulation link portion 5. The first articulation link portion 5 is adapted to be connected to one of the front vehicle body 2 or the rear vehicle body 3. A stud 6 is arranged in a second articulation link portion 7, and extends along an axis A. The second articulation link portion 7 is adapted to be connected to another one of said front vehicle body 2 or said rear vehicle body 3. A spherical bearing 11 is arranged in the socket 4 and the stud 6 is arranged in the spherical bearing 11.

Furthermore, an upper and a lower annular sealing device 8 is enclosing the articulated joint, i.e. the stud 6 arranged in the spherical bearing 11 which is arranged in the socket 4. The articulated joint 1 comprises a cover plate 12, adapted to at least partly cover the stud 6, and the socket 4 with the spherical bearing 11. The upper sealing device 8 is attached to a lower surface of the cover plate 12 and the lower sealing device 8 is arranged in a fastening element 16 attached to an upper surface of the second articulation link portion 7. Each one of the upper and the lower annular sealing devices 8 comprises a sealing flange 9. Regarding the lower sealing device 8 a first edge 18 of the sealing device 8 is arranged in the fastening element 16 attached to the second articulation link portion 7, and a second edge, comprising the sealing flange 9, seals said sealing device 8 against said first articulation link portion 5. Regarding the upper sealing device 8, the first edge 18 of the sealing device 8 is attached in a recess 20 at a lower surface 22 of the cover plate 12. A second edge of the upper sealing device 8, comprising the sealing flange 9, seals said sealing device 8 against said spherical bearing 11. The sealing flange 9 abuts against the spherical bearing 11 and an annular sealing space 19 is provided at an inner side 21 of said sealing device 8. Naturally, the sealing device 8 may be attached to the first articulation link portion 5 or the second articulation link portion 7. The sealing device is preferably made from plastics, rubber, or any other suitable flexible material, e.g. polyurethane. The sealing device and in particular, the sealing flange 9, being made from a flexible material, provides for an improved sealing effect. This, since in the case when the sealing flange 9 abuts against any part of the articulated joint 1, an outer influence from for example a high pressure cleaner will cause the sealing flange 9 to abut more tightly against the joint 1. The height h of the sealing device 8 is approximately 5-20 mm and the width w is approximately 2-10 mm. The sealing flange 9 is directed away from the axis A and the sealing device 8 has an essentially V-shaped cross-section. The length L of the sealing flange 9 is approximately 5-20 mm.

Figure 3 shows a cross-section A-A of the lower one of the articulated joints 1 in Figure 1. The articulated joint 1 is adapted to connect a front vehicle body 2 and a rear vehicle body 3. The articulated joint 1 comprises a socket 4 arranged in a first articulation link portion 5. The first articulation link portion 5 is adapted to be connected to one of the front vehicle body 2 or the rear vehicle body 3. A stud 6 is arranged in a second articulation link portion 7, and extends along an axis A. The second articulation link portion 7 is adapted to be connected to another one of said front vehicle body 2 or said rear vehicle body 3. A spherical bearing 11 is arranged in the socket 4 and the stud 6 is arranged in the spherical bearing, such that said stud 6 is pivotally connected to said socket 4. Furthermore, an annular sealing device 8 is enclosing the stud 6 arranged in the spherical bearing 11. The sealing device 8 is arranged in a fastening element 16 attached to a lower surface of said second articulation link portion 7. The annular sealing device 8 comprises a sealing flange 9. A gap 17 is provided between the sealing flange 9 and the first articulation link portion 5. The gap 17 is sufficiently small, approximately 0,1-10 mm, such that a sealing effect occurs and such that the sealing device 8 still prevents ingress of e.g. water, and prevents dirt from being pushed into the joint. Furthermore, a first edge 18 of the sealing device 8 is arranged in the fastening element 16 attached to the second articulation link portion 7, and a second edge, comprising the sealing flange 9, seals said sealing device 8 against said first articulation link portion 5. At the lower side of said articulated joint 1, a bearing protection 14 is arranged. The stud 6 is secured in said spherical bearing 11 by means of a plurality of screws 13.

As further illustrated in Figure 3, the annular sealing device 8 and the sealing flange 9 is arranged such that an annular sealing space 19, adapted to contain a lubricant, is provided. The annular sealing space 19 encloses the stud 6 and the socket 4 provided with the spherical bearing 11. The sealing flange 9 is directed away from the axis A and the sealing device 8 has an essentially V-shaped cross-section. The length L of the sealing flange 9 is approximately 5-20 mm.

According to a further aspect, the present invention relates to an implement carrier vehicle 10 for carrying at least one implement. The implement carrier vehicle 10 may for example be a lawn mower, snow thrower, flail mower, front loader.

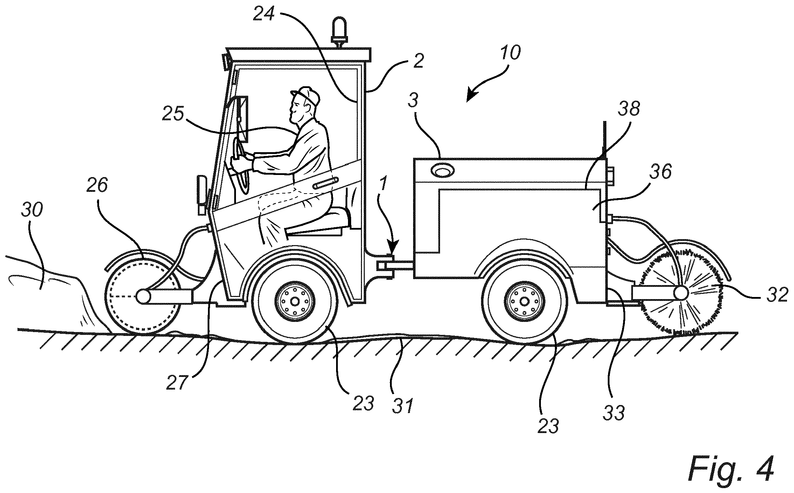

Fig. 4 illustrates an implement carrier vehicle 10 comprising an articulated joint 1. The implement carrier vehicle 10 comprises a front vehicle 2 body and a rear vehicle body 3 and wherein the articulated joint 1 connects the front vehicle body 2 and the rear vehicle body 3 making it possible for the front and rear bodies 2, 3 to partly turn and twist along vertical and horizontal axis of rotation. The front and rear vehicle body 2, 3 is each provided with two wheels 23. The front vehicle body 2 comprises a cabin 24 in which an operator 25 may sit and operate the implement carrier vehicle 10.
The implement carrier vehicle 10 is arranged for carrying one or more implements. In the embodiment illustrated in Fig. 4 a first implement 26 is attached to a front end 27 of the front vehicle body 2. The first implement 26 may, for example, be a snow thrower 26. The snow thrower 26 may, for example, be used for removing snow 30 from a street 31.

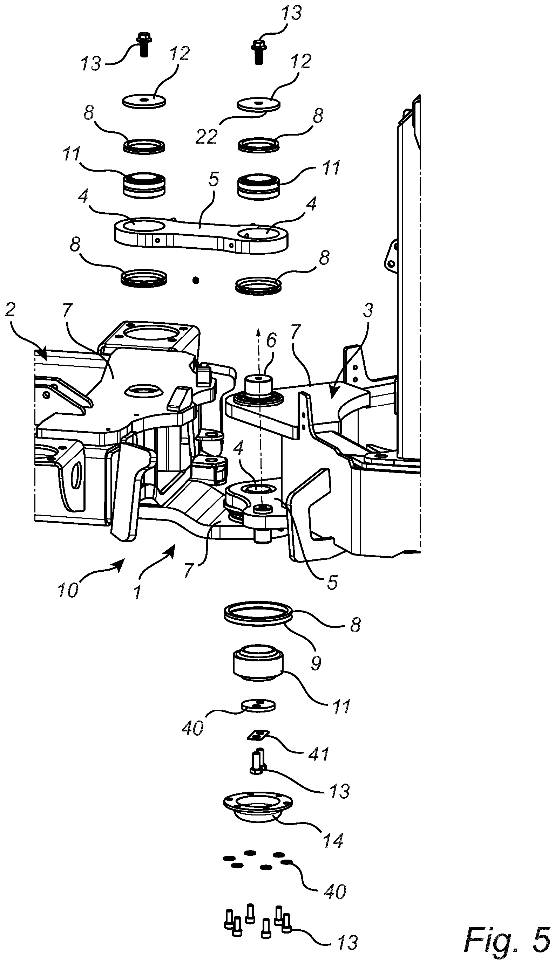

A second implement 32 is attached to a rear end 33 of the rear vehicle body 3. The second implement 32 may, for example, be a rotating brush 32. The rotating brush 32 may, for example, be used for brushing away any residual snow from the street 31.The rear part 4 comprises an engine compartment 36. An internal combustion engine, an electrical engine, or a hybrid engine, is arranged in the engine compartment 36. In one embodiment, as illustrated in Figure 5, the implement carrier vehicle 10 comprises a plurality of articulated joints 1.

Figure 5 shows an exploded view of a plurality of articulated joints 1 connecting a front vehicle body 2 and a rear vehicle body 3 of an implement carrier vehicle 10 (only portions of the vehicle is shown), according to one embodiment of the present invention. The articulated joints 1 are adapted to connect a front vehicle body 2 and a rear vehicle body 3. Each one of said articulated joints 1 comprises a socket 4 arranged in a first articulation link portion 5. The first articulation link portion 5 is connected to one of the front vehicle body 2 or the rear vehicle body 3. A stud 6 is arranged in a second articulation link portion 7, extending along an axis A. The second articulation link portion 7 is connected to another one, i.e. a different vehicle body from which the first articulation link portion 5 is connected to, of the front vehicle body 2 or the rear vehicle body 3. Furthermore, the stud 6 is pivotally arranged in the socket 4, such that a swivel connection is achieved. As seen in Figure 5, a spherical bearing 11 is arranged in each socket 4, and the stud 6 is arranged in said spherical bearing 11. Each articulated joint 1 comprises an upper and a lower annular sealing device 8 at least partly enclosing the stud 6 and socket 4, being pivotally connected via the spherical bearing 11, and the annular sealing device 8 further comprises a sealing flange 9. In Figure 5, the first articulation link portion 5 comprises two sockets 4, being arranged in different ends of the first articulation link portion 5.

In the embodiment shown in Figure 5, each articulated joint 1 comprises a spherical bearing 11 which is arranged in the socket 4, and the stud 6 is adapted to be arranged in the spherical bearing 11. At an upper side of the articulated joint 1 a cover plate 12 is arranged. The cover plate is fastened to said stud 6 with a screw 13. However, the cover plate 12 may be fastened by any other suitable fastening means, such as glue or similar. The sealing device 8 is adapted to be attached to a lower surface 22 of said cover plate 12. At a lower side of said articulated joint 1, a bearing protection 14 is arranged. Each articulated joint 1 further comprises a number of washers 40, a securing plate 41, and a plurality of screws 13.

The present invention is not limited to the above-described preferred embodiments. Various alternatives, modifications and equivalents may be used. Therefore, the above embodiments should not be taken as limiting the scope of the invention, which is defined by the appending claims.

## Claims

1. Articulated joint (1) for an implement carrier vehicle, said articulated joint (1) being adapted to connect a front vehicle body (2) and a rear vehicle body (3), said articulated joint (1) comprising:
- a socket (4) arranged in a first articulation link portion (5), said first articulation link portion (5) being adapted to be connected to one of said front or said rear vehicle body (2, 3);
- a stud (6) arranged in a second articulation link portion (7), and extending along an axis A, said second articulation portion (7) being adapted to be connected to another one of said front or rear vehicle body (2, 3), said stud (6) being pivotally arranged in said socket (4);
**characterized in**
**that** an upper and a lower annular sealing device (8) comprising a sealing flange (9) at least partly enclose said stud (6) and socket (4).

2. Articulated joint according to claim 1, wherein said annular sealing devices (8) and their sealing flanges (9) are arranged such that an annular sealing space (19), adapted to contain a lubricant, is provided.

3. Articulated joint according to claim 2, wherein said annular sealing space (19) encloses said stud (6) and socket (4).

4. Articulated joint according to any of claims 1-3, wherein each sealing flange (9) is directed away from said axis A.

5. Articulated joint according to any of claims 1-4, wherein each sealing device (8) has an essentially V-shaped cross-section.

6. Articulated joint according to any of claims 1-5, wherein said articulated joint (1) comprises at least one cover plate (12), adapted to at least partly cover said stud (6) and said socket (4) being pivotally connected.

7. Articulated joint according to claim 6, wherein a sealing device (8) is attached to said cover plate (12).

8. Articulated joint according to any of claims 6-7, wherein a sealing flange (9) seals said cover plate (12) to said first articulation link portion (5).

9. Articulated joint according to any of claims 6-7, wherein a sealing flange (9) seals said cover plate (12) to said second articulation link portion (7).

10. Articulated joint according to any of claims 1-9, wherein a spherical bearing (11) is arranged in said socket (4), and wherein said stud (6) is arranged in said spherical bearing (11).

11. Articulated joint according to claim 10, wherein a sealing flange (9) seals said cover plate (12) to said spherical bearing (11).

12. Articulated joint according to any of claims 1-5 or 10, wherein said sealing devices (8) are attached to said first articulation portion (5) or said second articulation portion (7).

13. Implement carrier vehicle (10) for carrying at least one implement, said implement carrier vehicle (10) comprising at least one articulated joint (1) according to any of claims 1-12, said implement carrier vehicle (10) comprises a front vehicle body (2) and a rear vehicle body (3) and wherein said at least one articulated joint (1) connects said front vehicle body (2) and said rear vehicle body (3).

14. Implement carrier vehicle according to claim 13, wherein said implement carrier vehicle (10) comprises a plurality of articulated joints (1).

## Patentansprüche

1. Gelenkverbindung (1) für ein Geräteträgerfahrzeug, wobei die Gelenkverbindung (1) dazu ausgelegt ist, eine vordere Fahrzeugkarosserie (2) und eine hintere Fahrzeugkarosserie (3) zu verbinden, wobei die Gelenkverbindung (1) umfasst:
- eine Buchse (4), die in einem ersten Gelenkgliedabschnitt (5) angeordnet ist, wobei der erste Gelenkgliedabschnitt (5) dazu ausgelegt ist, mit einer aus der vorderen oder der hinteren Fahrzeugkarosserie (2, 3) verbunden zu sein;
- einen Bolzen (6), der in einem zweiten Gelenkgliedabschnitt (7) angeordnet ist und sich entlang einer Achse A erstreckt, wobei der zweite Gelenkabschnitt (7) dazu ausgelegt ist, mit einer anderen aus der vorderen oder hinteren Fahrzeugkarosserie (2, 3) verbunden zu sein, wobei der Bolzen (6) schwenkbar in der Buchse (4) angeordnet ist;
**dadurch gekennzeichnet,**
**dass** eine obere und eine untere ringförmige Dichtungsvorrichtung (8), die einen Dichtungsflansch (9) umfassen, den Bolzen (6) und die Buchse (4) mindestens teilweise umschließen.

2. Gelenkverbindung nach Anspruch 1, wobei die ringförmigen Dichtungsvorrichtungen (8) und ihre Dichtungsflansche (9) derart angeordnet sind, dass ein ringförmiger Dichtungsraum (19) bereitgestellt wird, der dazu ausgelegt ist, ein Schmiermittel zu enthalten.

3. Gelenkverbindung nach Anspruch 2, wobei der ringförmige Dichtungsraum (19) den Bolzen (6) und die Buchse (4) umschließt.

4. Gelenkverbindung nach einem der Ansprüche 1 - 3, wobei jeder Dichtungsflansch (9) von der Achse A weg weist.

5. Gelenkverbindung nach einem der Ansprüche 1 - 4, wobei jede Dichtungsvorrichtung (8) einen im Wesentlichen V-förmigen Querschnitt aufweist.

6. Gelenkverbindung nach einem der Ansprüche 1 - 5, wobei die Gelenkverbindung (1) mindestens eine Abdeckplatte (12) umfasst, die dazu ausgelegt ist, den Bolzen (6) und die Buchse (4), die schwenkbar verbunden sind, mindestens teilweise abzudecken.

7. Gelenkverbindung nach Anspruch 6, wobei an der Abdeckplatte (12) eine Dichtungsvorrichtung (8) angebracht ist.

8. Gelenkverbindung nach einem der Ansprüche 6 - 7, wobei ein Dichtungsflansch (9) die Abdeckplatte (12) gegenüber dem ersten Gelenkgliedabschnitt (5) abdichtet.

9. Gelenkverbindung nach einem der Ansprüche 6 - 7, wobei ein Dichtungsflansch (9) die Abdeckplatte (12) gegenüber dem zweiten Gelenkgliedabschnitt (7) abdichtet.

10. Gelenkverbindung nach einem der Ansprüche 1 - 9, wobei in der Buchse (4) ein kugelförmiges Lager (11) angeordnet ist und wobei der Bolzen (6) in dem kugelförmigen Lager (11) angeordnet ist.

11. Gelenkverbindung nach Anspruch 10, wobei ein Dichtungsflansch (9) die Abdeckplatte (12) gegenüber dem kugelförmigen Lager (11) abdichtet.

12. Gelenkverbindung nach einem der Ansprüche 1 - 5 oder 10, wobei die Dichtungsvorrichtungen (8) an dem ersten Gelenkabschnitt (5) oder dem zweiten Gelenkabschnitt (7) angebracht sind.

13. Geräteträgerfahrzeug (10) zum Tragen mindestens eines Geräts, wobei das Geräteträgerfahrzeug (10) mindestens eine Gelenkverbindung (1) nach einem der Ansprüche 1 - 12 umfasst, wobei das Geräteträgerfahrzeug (10) eine vordere Fahrzeugkarosserie (2) und eine hintere Fahrzeugkarosserie (3) umfasst und wobei die mindestens eine Gelenkverbindung (1) die vordere Fahrzeugkarosserie (2) und die hintere Fahrzeugkarosserie (3) verbindet.

14. Geräteträgerfahrzeug nach Anspruch 13, wobei das Geräteträgerfahrzeug (10) mehrere Gelenkverbindungen (1) umfasst.

## Revendications

1. Joint articulé (1) pour un véhicule de support d'outil, ledit joint articulé (1) étant adapté pour raccorder un corps de véhicule avant (2) et un corps de véhicule arrière (3), ledit joint articulé (1) comprenant :
- une prise (4) agencée dans une première partie de liaison d'articulation (5), ladite première partie de liaison d'articulation (5) étant adaptée pour être connectée à l'un dudit corps de véhicule avant ou dudit corps de véhicule arrière (2, 3) ;
- un crampon (6) agencé dans une seconde partie de liaison d'articulation (7), et s'étendant le long d'un axe A, ladite seconde partie d'articulation (7) étant adaptée pour être connectée à un autre dudit corps de véhicule avant ou arrière (2, 3), ledit crampon (6) étant agencé de manière à pivoter dans ladite prise (4) ;
**caractérisé en ce**
**qu'**un dispositif d'étanchéité supérieur ou inférieur (8) comprenant une bride d'étanchéité (9) entoure au moins partiellement ledit crampon (6) et ladite prise (4).

2. Joint articulé selon la revendication 1, dans lequel lesdits dispositifs d'étanchéité annulaires (8) et leurs brides d'étanchéité (9) sont agencés de sorte qu'un espace d'étanchéité annulaire (19), adapté pour contenir un lubrifiant, est fourni.

3. Joint articulé selon la revendication 2, dans lequel ledit espace d'étanchéité annulaire (19) entoure ledit crampon (6) et ladite prise (4).

4. Joint articulé selon l'une quelconque des revendications 1 - 3, dans lequel chaque bride d'étanchéité (9) est orientée de façon à s'éloigner dudit axe A.

5. Joint articulé selon l'une quelconque des revendications 1 - 4, dans lequel chaque dispositif d'étanchéité (8) possède une section longitudinale essentiellement en forme de V.

6. Joint articulé selon l'une quelconque des revendications 1 - 5, dans lequel ledit joint articulé (1) comprend au moins une plaque de recouvrement (12), adaptée pour au moins partiellement recouvrir ledit crampon (6) et ladite prise (4) étant raccordée de manière pivotante.

7. Joint articulé selon la revendication 6, dans lequel un dispositif d'étanchéité est attaché à ladite plaque de recouvrement (12).

8. Joint articulé selon l'une quelconque des revendications 6 - 7, dans lequel une bride d'étanchéité (9) scelle ladite plaque de recouvrement (12) à ladite première partie de liaison d'articulation (5).

9. Joint articulé selon l'une quelconque des revendications 6 - 7, dans lequel une bride d'étanchéité (9) scelle ladite plaque de recouvrement (12) à ladite première partie de liaison d'articulation (5).

10. Joint articulé selon l'une quelconque des revendications 1 - 9, dans lequel un roulement à rotule (11) est agencé dans ladite prise (4), et dans lequel ledit crampon (6) est agencé dans ledit roulement à rotule (11).

11. Joint articulé selon la revendication 10, dans lequel une bride d'étanchéité (9) scelle ladite plaque de recouvrement (12) audit roulement à rotule (11).

12. Joint articulé selon l'une quelconque des revendications 1 - 5 ou la revendications 10, dans lequel lesdits dispositifs d'étanchéité (8) sont attachés à ladite première partie d'articulation (5) ou à ladite seconde partie d'articulation (7).

13. Véhicule de support d'outil (10) pour transporter au moins un outil, ledit véhicule de support d'outil (10) comprenant au moins un joint articulé (1) selon l'une quelconque des revendications 1 - 12, ledit véhicule de support d'outil (10) comprend un corps de véhicule avant (2) et un corps de véhicule arrière (3) et dans lequel ledit au moins un joint articulé (1) connecte ledit corps de véhicule avant (2) et ledit corps de véhicule arrière (3).

14. Véhicule de support d'outil selon la revendication 13, dans lequel ledit véhicule de support d'outil (10) comprend une pluralité de joints articulés (1).
